# EUROPEAN PATENT APPLICATION

(11) **EP 2 399 703 A1**
(43) Date of publication of application: **28.12.2011**
(21) Application number: 10743867.3
(22) Date of filing: 23.02.2010
(51) Int. Cl.: B23K 26/38, B23K 26/06, B23K 26/073, B23K 26/14, B23K 103/04

(54) **LASER CUTTING METHOD AND LASER CUTTING EQUIPMENT**

(30) Priority: 23.02.2009 JP 2009039283
(71) Applicant: Koike Sanso Kogyo Co., Ltd., Tokyo 133-0057 (JP)
(72) Inventor: KIMURA, Seiichiro, Tokyo 133-0057 (JP); TANAKA, Akito, Tokyo 133-0057 (JP); KOIKE, Tetsuo, Tokyo 133-0057 (JP)
(74) Representative: Patentanwälte Westphal, Mussgnug & Partner
(86) International application number: PCT/JP2010/052673
(87) International publication number: WO 2010/095744

(57) **Abstract**

Disclosed are a cutting method and cutting equipment for cutting steel sheet using a solid-state laser or fibre laser. In this cutting method, a laser beam that is emitted from a solid-state laser oscillator or fibre laser oscillator is formed into a ring beam (1). This ring beam (1) is directed onto a material (4) that is to be cut. Oxygen gas (2) is jetted along the axis (5) thereof. This cutting equipment has: a laser oscillator (11), a laser torch (12) having a nozzle (3), an optical system that has a conical prism (13) that is constructed between the laser oscillator (11) and the nozzle (3), a convex lens (14) and an optical fibre (15); and an oxygen gas supply system (17) that is connected with the laser torch (12). The laser beam that is emitted from the laser oscillator is formed, by means of the optical system, into the ring beam (1) and is directed from the nozzle (3) towards the material (4) that is to be cut, and the material (4) is cut by jetting the oxygen gas (2) that is supplied from the oxygen gas supply system (17) from the nozzle (3) towards the material (4) that is to be cut.

## Description

### TECHNICAL FIELD

The present invention relates to a cutting method in which a laser beam emitted from a solid laser oscillator or a fiber laser oscillator is formed into a ring shape to be irradiated to a material to be cut, and, at the same time, in which an oxygen gas is jetted along an axis of the ring-shaped beam, whereby the material to be cut is cut, and also to cutting equipment implementing the cutting method.

### BACKGROUND ART

A method of irradiating a laser beam from a laser torch toward a material to be cut and, at the same time, jetting an assist gas to cut the material, has been performed. In the laser cutting method, the laser beam emitted from a laser oscillator is collected by a lens, and a laser spot with a high energy density is formed on the material to be cut. In the material formed with the laser spot, the parent material is evaporated or melted, and a molten object is removed from the parent material by the jetted assist gas. The laser torch is then moved and thereby forms a continuous groove in the material to be cut, and the material is cut.

When the material to be cut is a steel sheet containing mild steel, a carbon dioxide gas laser with a wavelength of 10. 6 µm is generally used. However, recently, a laser having a wavelength of about 1/10 of that of a carbon dioxide gas laser such as a solid laser including a YAG laser and a fiber laser has attracted attention as means for cutting a steel material.

For example, Patent Document 1 discloses the invention of laser processing equipment, which welds or cuts a material using a YAG laser, and a laser processing head. Since a pressure of a cutting gas is affected by compression strength of a collecting lens system due to a conventional method of supplying the cutting gas from the periphery of a laser beam, there is a limit to increase the pressure of the cutting gas, and this point is one of the problems to be solved by the invention.

In the technique of the Patent Document 1, the laser processing head is provided with an optical system that divides a laser beam into a plurality of light fluxes, a plurality of light collection optical systems that collect the laser beam at a portion to be processed, and a support portion that exchangeably supports processing means between the light fluxes of the laser beam collected by the light collection optical systems and arranges a processing part of the processing means toward the portion to be processed, whereby while the processing part is always coincided with respect to the same portion to be processed, laser processing and other processing can be performed simultaneously. Consequently, the laser beam and the power for processing in other processing can be simultaneously supplied to the portion to be processed without affecting a lens system, so that good processing can be performed.

### PRIOR ART DOCUMENT

### PATENT DOCUMENT

Patent Document 1: Japanese Patent No. 3752112

### DISCLOSURE OF THE INVENTION

### PROBLEMS TO BE SOLVED BY THE INVENTION

In both the laser cutting method of cutting a steel sheet using the carbon dioxide gas laser and the method of cutting a steel sheet by means of the laser processing equipment described in the Patent Document 1, the focus of the laser beam is located at the substantial surface of a material to be cut to form a laser spot. The material is cut by jetting the assist gas or the cutting gas toward the laser spot. Namely, in each of the techniques, when the material to be cut is cut, the parent material is evaporated or melted by a laser, and the molten object is removed from the parent material by the assist gas or the cutting gas.

As described above, in the laser cutting, the laser beam is collected by the lens to form the laser spot with high energy density, whereby energy is intensively applied to a material to be cut, so that the material is cut. Namely, the laser beam plays the principal role in the cutting process for the material to be cut, and the assist gas and the cutting gas just play the auxiliary role.

An object of the present invention is to provide a new cutting method that is used when a steel sheet containing mild steel is cut using a solid laser or a fiber laser and new cutting equipment that realizes the cutting method.

### MEANS FOR SOLVING THE PROBLEMS

In order to solve the above problems, the laser cutting method according to the present invention is **characterized in that** a laser beam emitted from a solid laser oscillator or a fiber laser oscillator is formed into a ring-shaped beam to be irradiated to a material to be cut, and, at the same time, an oxygen gas is jetted along the axis of the ring-shaped beam, whereby the material is cut.

Further, the laser cutting equipment according to the present invention has a solid laser oscillator or a fiber laser oscillator, a laser torch having a nozzle disposed to face a surface of a material to be cut, an optical system configured between the laser oscillator and the nozzle of the laser torch and having at least a conical prism, a convex lens, and an optical fiber, and an oxygen gas supply system connected to the laser torch. The laser cutting equipment is configured so that laser beam emitted from the laser oscillator is formed into ring-shaped beam through the optical system to be irradiated from the nozzle of the laser torch toward the material to be cut, and, at the same time, an oxygen gas supplied from the oxygen gas supply system is jetted from the nozzle of the laser torch toward the material to be cut, whereby the material is cut.

In the above laser cutting equipment, it is preferable that the optical system includes a system constituted of a combination of a concave lens and a convex lens for enlarging the laser beam.

### EFFECT OF THE INVENTION

In the laser cutting method according to the present invention, a laser beam emitted from a solid laser oscillator or a fiber laser oscillator (hereinafter referred to simply as a "laser oscillator") is formed into a ring-shaped beam to irradiate the ring-shaped beam to a material to be cut, whereby a parent material of the material can be heated. Then, an oxygen gas is jetted along the axis of the ring-shaped beam, whereby, while the heated portion of the material to be cut is burned, a molten object is removed from the parent material, so that the material can be cut.

The beam formed into a ring shape only raises the temperature of an irradiated portion of the material to be cut without evaporating or melting the irradiated portion. The oxygen gas jetted along the axis of the ring-shaped beam burns the parent material of the material to be cut and, at the same time, removes the molten object. The burning of the parent material and the removal of the molten object by the oxygen gas are the same as the functions of cutting oxygen in a gas cutting method.

Accordingly, the laser cutting method according to the present invention is different from a conventional laser cutting method and similar to a conventional gas cutting method. Thus, a material to be cut can be heated by combustion heat generation of a parent material, and even when a laser oscillator with the same output power is used, a thicker material to be cut can be cut.

In the laser cutting equipment according to the present invention, since the optical system having the conical prism, the convex lens, and the optical fiber is provided between the laser oscillator and the nozzle of the laser torch, it is possible to form the laser beam, emitted from the laser oscillator, into a ring shape by the conical prism, form the laser beam into a ring-shaped beam by the convex lens, and irradiate the ring-shaped beam from the nozzle toward the material to be cut. Further, the oxygen gas is supplied from the oxygen gas supply system to the laser torch, whereby the supplied oxygen gas can be jetted from the nozzle of the laser torch.

Accordingly, the beam formed into a ring shape can be irradiated from the nozzle of the laser torch, and, at the same time, the oxygen gas can be jetted along the axis of the beam from the nozzle. Thus, the laser torch is disposed to face the surface of the material to be cut, the laser beam is emitted from the laser oscillator, and, at the same time, the oxygen gas is supplied from the oxygen gas supply system, whereby the material to be cut is heated by the beam formed into a ring shape, and while the heated portion is burned, a molten obj ect is removed, so that the material can be cut.

### BRIEF DESCRIPTION OF THE DRAWINGS

FIG. 1 is a view for explaining a laser cutting method.
FIG. 2 is a view for explaining a schematic configuration of laser cutting equipment.
FIG. 3 is a view for explaining a configuration of a laser torch.
FIG. 4 is an explanatory view in which a ring-shaped beam is formed by a conical prism and a convex lens.

### DESCRIPTION OF REFERENCE NUMERALS

- 1: Ring beam
- 1a: Inner diameter
- 1b: Outer diameter
- 2: Oxygen gas
- 3: Nozzle
- 3a: Hole
- 4: Material to be cut
- 5: Axis
- 11: Laser oscillator
- 12: Laser torch
- 12a: Chamber
- 12b: Main body
- 12c: Lens unit
- 12d: Nozzle unit
- 13: Conical prism
- 14: Convex lens
- 15: Optical fiber
- 15a: Protective tube
- 16: Optical system
- 17: Oxygen gas supply system
- 17a: Hose
- 17b: Nipple
- 18: Coupling
- 18a, 18b: Convex lens
- 19: Optical system
- 19a: Concave lens
- 19b: Convex lens
- 20: Dichroic mirror
- 21: Monitoring system
- 21a: Optical axis
- 22: CCD camera
- 23: Mirror
- 24: Lens unit
- 25: Adjust ring
- 28: Cooling water passage
- 29: Water supply and drainage port

### BEST MODE FOR CARRYING OUT THE INVENTION

Hereinafter, a laser cutting method and laser cutting equipment according to the present invention will be described. In the laser cutting method according to the present invention, a material to be cut is heated by a laser beam formed into a ring shape, and an oxygen gas is jetted against the heated portion to burn a parent material of the material to be cut. At the same time, a combustion product and a molten object are removed from the parent material by motion energy of the oxygen gas, whereby the material to be cut is cut. Namely, the laser cutting method according to the present invention is similar to the conventional gas cutting method and realizes the cutting method different from the conventional laser cutting method of evaporating or melting the material to be cut by the energy of a laser beam and cutting the material.

The material to be cut by the laser cutting method according to the present invention is required to be a material whose parent material can be burned by the oxygen gas. Namely, the material to be cut can include all materials that can be cut well by the conventional gas cutting method, preferably a steel sheet containing materials such as mild steel, carbon steel, and alloy steel.

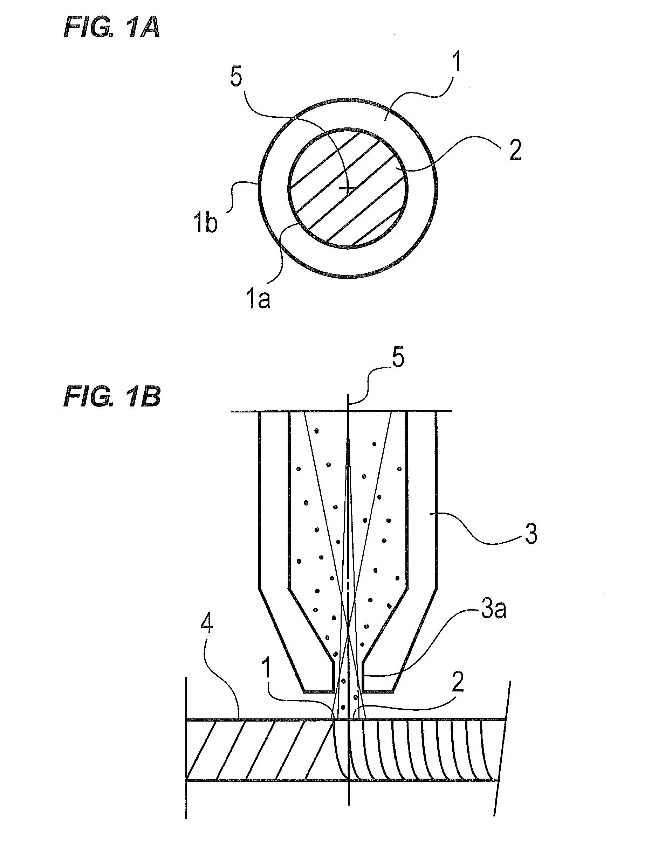

First, the laser cutting method according to the present invention will be described with reference to FIG. 1. In the present invention, a laser beam emitted from a solid laser oscillator such as an Nd:YAG laser and a DISC laser or a laser oscillator such as a fiber laser oscillator is formed into a ring-shaped beam (hereinafter referred to as a "ring beam") 1, and the ring beam 1 is irradiated from a nozzle 3 of a laser torch to a material 4 to be cut.

In the present invention, with regard to the ring beam 1, it is only necessary to form the laser beam into a ring shape, and the means of forming the laser beam into a ring shape is not limited. The method of forming the ring beam 1 includes a method utilizing a combination of a conical prism 13 and a convex lens 14 as in the laser cutting equipment to be described later and a method utilizing a short focus lens, and it is preferable to selectively use these methods.

The energy density of the ring beam 1 is lower than the energy density of a laser spot formed by collecting a laser beam by a lens, and although the temperature of the parent material of the material 4 irradiated with the ring beam 1 is increased, the parent material is not evaporated or melted. In the laser cutting method according to the present invention, it is preferable that the ring beam 1 has the energy density that can increase the temperature of an irradiated portion of the material 4 to approximately 900°C to 1000°C. The temperature of the irradiated portion of the material 4 irradiated with the ring beam 1 is increased to about 900°C to about 1000°C, whereby an oxygen gas 2 is jetted along an axis 5 of the ring beam 1, so that the parent material can be burned.

As the oxygen gas 2 jetted along the axis 5 of the ring beam 1, an oxygen gas with the same purity as an oxygen gas used in normal gas cutting can be used. Especially, when the oxygen gas 2 is jetted along the axis 5 of the ring beam 1, it is preferable that the jetted oxygen gas 2 traces an inner diameter 1a of the ring beam 1.

Namely, it is preferable that the outer diameter of the oxygen gas 2 jetted from the nozzle 3 coincides with the inner diameter 1a of the ring beam 1 or is slightly smaller than the inner diameter 1a. However, since the oxygen gas 2 having a pressure higher than an atmospheric pressure is supplied to the nozzle 3, the oxygen gas 2 is expanded while being jetted from the nozzle 3, and the jetting of the oxygen gas 2 along the inner diameter 1a of the ring beam 1 cannot be ensured.

Thus, a hole 3a of the nozzle 3 through which the ring beam 1 is emitted in the laser torch and the oxygen gas 2 is jetted is formed to have a value substantially equal to or slightly smaller than the inner diameter 1a of the ring beam 1, whereby the oxygen gas 2 jetted from the nozzle 3 can substantially trace the inner diameter 1a of the ring beam 1. It is preferable that the hole 3a of the nozzle 3 appropriately has a straight shape, a shape widened toward the end thereof, and so on because of the relationship with the oxygen gas supplied to the nozzle 3.

The oxygen gas 2 jetted through the hole 3a of the nozzle 3 is not required to accurately trace the inner diameter 1a of the ring beam 1. For example, even if the oxygen gas 2 is larger than the inner diameter 1a of the ring beam 1, and a part thereof overlaps the ring beam 1, there is no problem. Meanwhile, when the oxygen gas 2 is smaller than the inner diameter 1a of the ring beam 1, and a gap is formed between the both of them, it may take a little more time at the start of the cutting of the material 4; however, a major problem does not occur once the cutting of the material 4 is started. However, when the oxygen gas 2 completely overlaps the ring beam 1 or is larger than the outer diameter 1b, burning may occur.

The size of the inner diameter 1a of the ring beam 1 is not limited especially. The inner diameter 1a of the ring beam 1 specifies a heating region of the material 4 to be cut, the region of the parent material to be burned when the oxygen gas 2 is jetted, and the value of the cut width of the material 4. Accordingly, although the size of the inner diameter 1a of the ring beam 1 changes according to the thickness of the material 4, the size of the inner diameter 1a is preferably within a range of about 0.5 mm to about 2 mm.

The size of the outer diameter 1b of the ring beam 1 is not limited. Especially, 1/2 of the difference between the outer diameter 1b of the ring beam 1 and the inner diameter 1a (beam width) is a portion (heating portion) having a heating function for the material 4 to be cut. Although the size of the heating portion changes according to the thickness of the material 4, it is sufficient for the size of the heating portion to be approximately 0.5 mm. Accordingly, it is preferable that the size of the outer diameter 1b of the ring beam 1 is approximately 1.5 mm to 3 mm.

However, each size of the inner diameter 1a and the outer diameter 1b of the ring beam 1 is not limited to the above size, and it is natural that each size can be set to have the energy density required to increase the temperature of the surface of the material 4 to be cut to about 900°C to 1000°C within a short time.

Although a distance (height of the nozzle 3) from the nozzle 3 to the surface of the material 4 to be cut is not limited, it is preferable that the nozzle 3 and the surface of the material 4 are close to each other as much as possible in consideration of expansion of the oxygen gas 2 jetted from the nozzle 3 and reduction in the purity of the oxygen gas 2 due to air. However, if the height of the nozzle 3 is reduced, when the material 4 is distorted, the nozzle 3 may be in contact with the material 4, or a sputtered object sputtered from the cutting portion may be adhered to the nozzle 3 or enter inside the hole 3a. Thus, it is preferable that the height of the nozzle 3 is set to be not less than about 3 mm.

Especially when the ring beam 1 is constituted of parallel beams, even if the height of the nozzle 3 is any value, no change occurs. However, when light is collected by a convex lens, the relationship between the convex lens and the focal length is required to be considered.

The procedure of piercing the material 4 to be cut by the laser cutting method according to the present invention and cutting the material 4, starting from the pierced point, will be described. First, the height of the nozzle 3 is set, and, at the same time, the nozzle 3 is moved to a cutting start point (piercing point), previously set to the material 4, and then stopped.

When the ring beam 1 is irradiated from the nozzle 3 toward the material 4 to be cut at a predetermined stop position, the temperature of the parent material of the portion irradiated with the ring beam 1 increases. When the temperature of the irradiated portion of the material 4 to be cut irradiated with the ring beam 1 increases to a range of about 900°C to about 1000°C, the oxygen gas 2 is jetted along the axis 5 of the ring beam 1 through the hole 3a of the nozzle 3, whereby the parent material of the portion whose temperature increases is burned, so that a molten object is produced.

A combustion product and a molten object produced with the burning of the parent material and having a fluidity are removed from the parent material by the motion energy of the jetted oxygen gas, and a new parent material is exposed. The parent material is heated in the thickness direction by combustion heat generated with the burning of the parent material. Namely, the surface side of the material 4 to be cut is heated by the ring beam 1, and the material 4 is heated in the thickness direction by the combustion heat. Thus, the continuing jetting of the oxygen gas 2 keeps the burning of the parent material, and a hole penetrating in the thickness direction of the material 4 is formed (pierced) in the material 4.

After the formation of the through-hole of the material 4 to be cut, when the nozzle 3 is moved in a previously set direction in a state that the irradiation with the ring beam 1 and the jetting of the oxygen gas 2 are kept, the ring beam 1 continuously heats the surface of the material 4 accompanying the movement of the nozzle 3, and, at the same time, the oxygen gas 2 keeps the burning of the parent material of the material 4 and the removal of the combustion product and the molten object from the parent material. A continuous groove is formed in the material 4 as described above, whereby the material 4 can be cut.

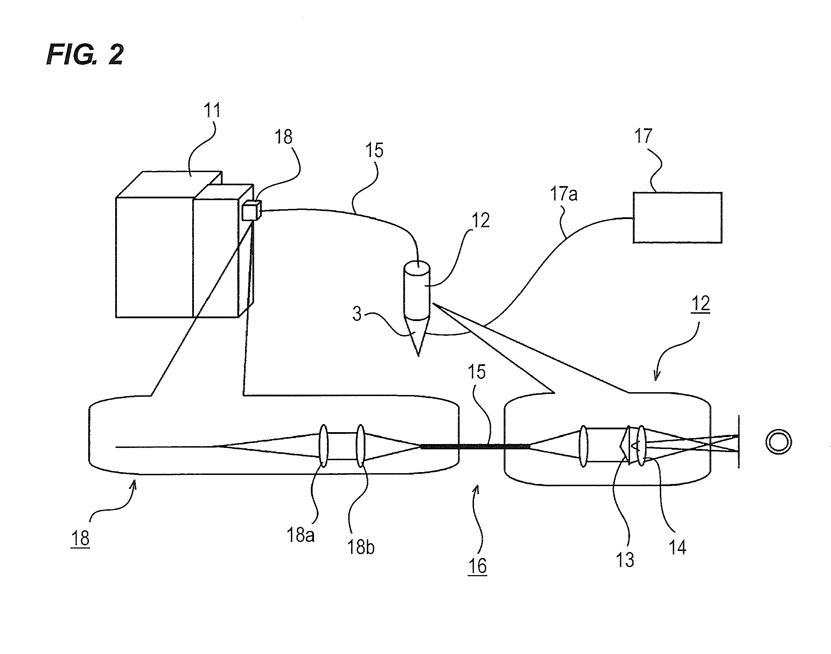

Next, the laser cutting equipment will be described with reference to FIGS. 2 to 5. First, the schematic configuration of the laser cutting equipment will be described with reference to FIG. 2.

The laser cutting equipment is configured to have a laser oscillator 11, a laser torch 12 having the nozzle 3, an optical system 16 configured between the laser oscillator 11 and the nozzle 3 and having at least a conical prism 13, a convex lens 14, and an optical fiber 15, and an oxygen gas supply system 17 connected to the laser torch 12 through a hose 17a.

The laser oscillator 11 is constituted of a laser oscillator selected from, for example, a solid laser oscillator such as an Nd: YAG laser and a DISC laser or a fiber laser oscillator. The laser beams emitted from those laser oscillators each have a wavelength of about 1 µm, which is about 1/10 of the wavelength of the laser beam emitted from a carbon dioxide gas laser oscillator.

When the laser oscillator 11 is a solid laser oscillator, the numerical aperture (NA) of the laser beam is 0.2 and is large, such as about 32 degrees. The laser oscillator 11 and the laser torch 12 are directly connected through the optical fiber 15. Although the core diameter of the optical fiber 15 is not limited especially, the numerical aperture is 0.2 or more, and the optical fiber with a core diameter of 0.3 mm to 0.6 mm is used.

However, when the laser oscillator 11 is a fiber laser oscillator, the numerical aperture of the laser beam is 0.1, and the spread angle is 1/2 of the spread angle of the laser beam emitted from a solid laser oscillator. Thus, a coupling 18 including convex lenses 18a and 18b is disposed at the laser oscillator 11, and after the numerical aperture of the laser beam is converted from 0.1 to 0.2 in the coupling 18, the laser beam can enter the optical fiber 15.

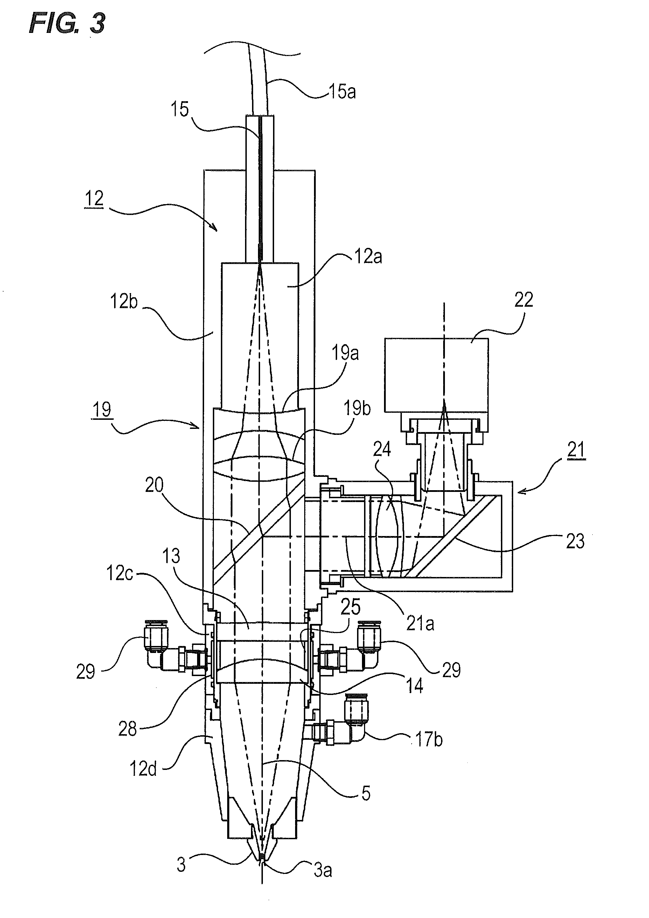

As shown in FIG. 3, the laser torch 12 includes a chamber 12a. The laser beam can pass through the chamber 12a, and the conical prism 13 and the convex lens 14 can be installed in the chamber 12a. The laser torch 12 is configured to have a main body 12b, a lens unit 12c configured to be attachable to and detachable from the main body 12b, and a nozzle unit 12d configured to be attachable to and detachable from the lens unit 12c. The lens unit 12c and the nozzle unit 12d are attached to the main body 12b, whereby the laser torch 12 including the chamber 12a is constituted.

The optical fiber 15 protected by a protective tube 15a is connected to the upper end side of the main body 12b of the laser torch 12, and the optical fiber 15 opens the chamber 12a and can emit the laser beam.

The main body 12b corresponding to the upstream of the chamber 12a of the laser torch 12 includes an optical system 19 constituted of a combination of a concave lens 19a and a convex lens 19b for enlarging the laser beam, and a dichroic mirror 20 is provided on the downstream of the optical system 19. By virtue of the dichroic mirror 20, the majority of the laser beam entering the dichroic mirror 20 passes through the conical prism 13 and the convex lens 14 to be dispersed in the direction of the nozzle 3 provided at the lower end of the laser torch 12, and a part of the laser beam is dispersed by the monitoring system 21.

The monitoring system 21 is configured to have a CCD camera 22, a mirror 23, and a lens unit 24. The components 22 to 24 are arranged along an optical axis 21a of 45 degrees with respect to the dichroic mirror 20. In the monitoring system 21 configured thus, the laser beam dispersed from the dichroic mirror 20 travels along the optical axis 21a. The path of the laser beam is changed by the mirror 23 while being collected by the lens unit 24, and the laser beam enters the CCD camera 22.

Accordingly, the CCD camera 22 photographs the laser beam in the dichroic mirror 20. The laser beam photographed by the CCD camera 22 is displayed on a display (not shown), and the operating situation of the laser beam is monitored by an operator.

The conical prism 13 and the convex lens 14 are provided in the lens unit 12c provided to be attachable to and detachable from the main body 12b of the laser torch 12, and the respective optical axes are arranged to coincide with the same axis 5. Thus, the laser beam passing through the dichroic mirror 20 to enter the conical prism 13 can be formed into the ring beam 1 having the axis 5.

The lens unit 12c is constituted of a double cylinder, and the conical prism 13 and the convex lens 14 are attached to the inner peripheral surface of the lens unit 12c. A cooling water passage 28 is configured inside the double cylinder. The lens unit 12c has water supply and drainage ports 29 provided on the outer peripheral surface. The water supply and drainage ports 29 supplies cooling water to the cooling water passage 28 and discharges the cooling water from the water supply and drainage ports 29. Accordingly, the cooling water is supplied from one of the water supply and drainage ports 29 to the cooling water passage 28, whereby the conical prism 13 and the convex lens 14 can be cooled through a cylindrical member constituting the lens unit 12c.

The conical prism 13 and the convex lens 14 are attached to the lens unit 12c through an adj ust ring 25, whereby the interval between the conical prism 13 and the convex lens 14 is kept constant. The conical prism 13 and the convex lens 14 are arranged so that their outer peripheral surfaces can be in contact with the inner peripheral surface of the lens unit 12c, so that good cooling can be realized. Especially, since the oxygen gas having a pressure is supplied into the chamber 12a of the laser torch 12, the conical prism 13 and the convex lens 14 are constituted as described above, so that, the interval between the conical prism 13 and the convex lens 14 is not changed, whereby stable refraction and collection of the laser beam can be realized.

Each specification of the conical prism 13 and the convex lens 14 is suitably set corresponding to the diameter of the laser beam entering the conical prism 13 and the size of the ring beam 1 to be formed. In the present embodiment, an angle formed by the bottom surface of the conical prism 13 and a normal line is set to 1 degree, and the convex lens 14 with a focal length of 30 mm, 50 mm, or 100 mm is selectively used to be combined with the conical prism 13.

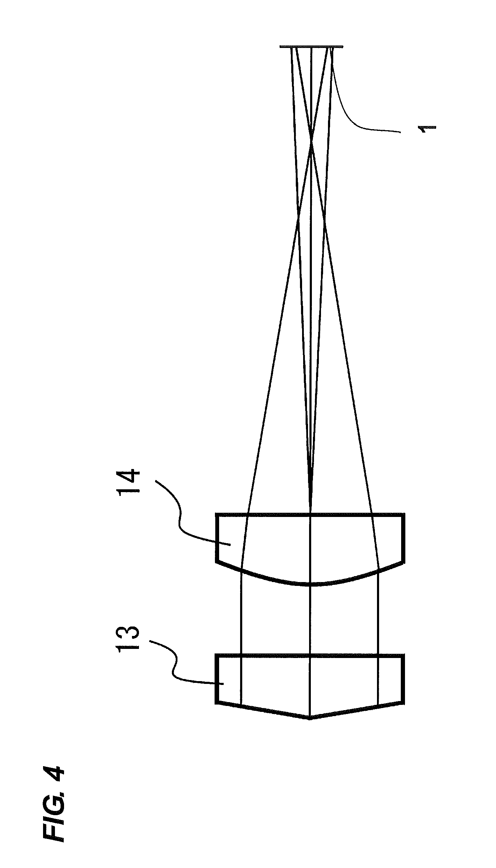

In the conical prism 13 and the convex lens 14 combined as described above, as shown in FIG. 4, the laser beam entering the conical prism 13 is refracted corresponding to the slope of the conical surface of the conical prism 13, whereby the ring beam is formed. The ring beam 1 emitted from the conical prism 13 enters the convex lens 14 to be collected, and, thus, to pass through the focal point. After that, the ring beam 1 is enlarged and then formed on the material 4 to be cut.

The nozzle unit 12d is configured to be attachable to and detachable from the lower end of the lens unit 12c attached to the main body 12b of the laser torch 12. The nozzle unit 12d has at its front end the hole 3a through which the ring beam 1 is emitted and the oxygen gas 2 is jetted. The central axis of the hole 3a coincides with the optical axis 5 of the conical prism 13 and the convex lens 14, that is, the axis 5 of the ring beam 1. The ring beam 1 is irradiated to the material 4 to be cut through the hole 3a, and, at the same time, the oxygen gas 2 is jetted through the hole 3a, whereby the oxygen gas 2 can be jetted along the axis 5 of the ring beam 1.

A nipple 17b is attached to a predetermined position of the nozzle unit 12d and connected to the oxygen gas supply system 17 through the nipple 17b and the hose 17a. The structure of the oxygen gas supply system 17 is not limited especially, and an oxygen gas supply system including an oxygen cylinder and factory piping can be used.

The supply pressure to be supplied from the oxygen gas supply system 17 to the nozzle unit 12d is set corresponding to the cross-sectional shape of the hole 3a of the nozzle 3. Namely, it is preferable that the supply pressure is set to such a pressure that a jet of the oxygen gas jetted through the hole 3a maintains the linearity as much as possible, and, at the same time, a pressure energy can be efficiently converted into a velocity energy.

In the laser cutting equipment constituted as described above, according to the structure of the laser oscillator 11, the laser beam emitted from the laser oscillator 11 reaches the chamber 12a of the laser torch 12 directly by the optical fiber 15, or the laser beam passes through the coupling 18 and then reaches the chamber 12a of the laser torch 12 by the optical fiber 15. Subsequently, the laser beam is emitted from the optical fiber 15 in the chamber 12a to become substantially parallel beams through the concave lens 19a and the convex lens 19b constituting the optical system 19, and, thus, to enter the dichroic mirror 20.

In the dichroic mirror 20, a part of the laser beam entering the dichroic mirror 20 is guided to the monitoring system 21 along the optical axis 21a, and the majority of the laser beam is guided to the conical prism 13 and the convex lens 14 along the axis 5. In the monitoring system 21, an image taken by the CCD camera 22 is displayed on a display (not shown), and the operating situation of the laser beam is monitored by an operator.

The laser beam entering the conical prism 13 is refracted toward the axis 5 and enters the convex lens 14 to be collected, and the ring beam 1 is formed. The ring beam 1 formed thus passes through the hole 3a of the nozzle 3 and, as shown in FIG. 1, is irradiated to the material 4 to be cut to heat the material 4.

Simultaneously with the heating of the material 4 to be cut by the ring beam 1 or after a lapse of a predetermined time from the heating of the material 4, the oxygen gas is supplied from the oxygen gas supply system 17 to the nozzle unit 12d. The oxygen gas supplied to the nozzle unit 12d is jetted toward the heated portion of the material 4 through the hole 3a of the nozzle 3 to burn a previously heated parent material. At the same time, the parent material is heated by the combustion heat, and a combustion product is removed.

While the burning of the parent material and the removal of the combustion product are performed as described above, the laser torch 12 is moved in a previously set cutting direction, whereby the material to be cut can be cut.

### INDUSTRIAL APPLICABILITY

The laser cutting method and the laser cutting equipment according to the present invention are advantageous in the utilization of cutting a steel sheet that has been cut by the conventional gas cutting method.

## Claims

1. A laser cutting method comprising:
cutting a material to be cut by irradiating a laser beam emitted from a solid laser oscillator or a fiber laser oscillator and formed into a ring-shaped beam, and, at the same time, by jetting an oxygen gas along the axis of the ring-shaped beam.

2. Laser cutting equipment comprising:
a solid laser oscillator or a fiber laser oscillator;
a laser torch having a nozzle disposed to face a surface of a material to be cut;
an optical system configured between the laser oscillator and the nozzle of the laser torch and having at least a conical prism, a convex lens, and an optical fiber; and
an oxygen gas supply system connected to the laser torch,
wherein the laser cutting equipment is constituted so that the material to be cut is cut by irradiating a laser beam emitted from the laser oscillator and is formed into a ring-shaped beam through the optical system from the nozzle of the laser torch toward the material to be cut, and, at the same time, by jetting an oxygen gas supplied from the oxygen gas supply system from the nozzle of the laser torch toward the material to be cut.

3. The laser cutting equipment according to claim 2, wherein the optical system includes a system including a combination of a concave lens and a convex lens for enlarging the laser beam.
